# EUROPEAN PATENT SPECIFICATION

(11) **EP 4 390 492 B1**
(45) Date of publication and mention of the grant of the patent: **08.07.2026**
(21) Application number: 23762668.4
(22) Date of filing: 09.01.2023
(51) Int. Cl.: G02B 7/18, G02B 26/08, H02K 41/035

(54) **PRISM MOTOR, AND ELECTRONIC DEVICE**
PRISMENMOTOR UND ELEKTRONISCHE VORRICHTUNG
MOTEUR À PRISME ET DISPOSITIF ÉLECTRONIQUE

(30) Priority: 03.03.2022 CN 202210209454; 24.05.2022 CN 202210570009
(43) Date of publication of application: 26.06.2024
(60) Divisional application: 26181271.3
(73) Proprietor: Honor Device Co., Ltd., Shenzhen, Guangdong 518040 (CN)
(72) Inventor: XIA, Taihong, Shenzhen, Guangdong 518040 (CN)
(74) Representative: Beder, Jens
(86) International application number: PCT/CN2023/071276
(87) International publication number: WO 2023/165267

(56) References cited:
- WO-A1-2022/019632
- CN-A- 110 764 217
- CN-A- 111 381 343
- CN-A- 113 194 216
- CN-A- 113 467 042
- CN-U- 211 741 798
- US-A- 5 966 253
- US-A1- 2009 073 562
- US-A1- 2020 409 125
- US-A1- 2021 373 282

## Description

This application claims priority to Chinese Patent Application No. 202210209454.4, entitled "PRISM ASSEMBLY, PRISM MOTOR, AND ELECTRONIC DEVICE" and filed with the China National Intellectual Property Administration on March 3, 2022, and Chinese Patent Application No. 202210570009.0, entitled "PRISM ASSEMBLY, PRISM MOTOR, AND ELECTRONIC DEVICE" and filed with the China National Intellectual Property Administration on May 24, 2022.

### TECHNICAL FIELD

This application relates to the field of electronic products, and in particular, to a prism motor, and an electronic device.

### BACKGROUND

In order to meet requirements for ultra-thin and high-pixel electronic products, periscope prism motors are more widely used in imaging systems. However, the periscope prism motor is relatively complex in structure, and jitters, abnormal sounds, and prism assembly errors often occur when the current prism motor is used.

US 5 966 253 A discloses a prism assembly, in which a wedge-shaped prism is fixed on a prism holder supported by a yoke member to rotate about a principal axis through an elastic device. The prism holder and yoke member are respectively provided with a coil and a permanent magnet secured thereto, to obtain a motor for a rotary movement of the prism holder in the forwards and backwards direction around the principal axis. The prism is partly cut away at the thick portion thereof so that the center of gravity of the transmission prism is identical to the principal axis.

WO 2022/019632 A1 discloses a camera actuator for use in compact optical modules (e.g., mobile device cameras) that integrates functions such as optical image stabilization (OIS), autofocus (AF), and zoom. The core structural setup centers on a mover (or prism actuator) comprising an optical member (such as a prism or lens), a holder with grooves or stoppers for secure mounting, and electromagnetic drive components (magnets, coils). The technical goal is to improve reliability by preventing separation or damage of the optical member, reducing magnetic interference, and ensuring accurate positioning of the mover, all while allowing a compact, high-resolution camera design. WO 2022/019632 A1 pays particular attention to reducing misalignment (i.e., the mover not being accurately controlled to a respective desired position), magnetic interference, and securing the optical member. It does so, for example, by providing a groove in the holder and arranging magnets to minimize interference from adjacent functional modules.

The present invention provides a prism motor according to the enclosed independent claim 1. Advantageous embodiments of the present invention are provided in the dependent claims. The prism motor is relatively low in power consumption.

In a specific implementation, a prism assembly of a prism motor includes at least a prism and a prism support. The prism support has a rotation center rotating relative to a base of a prism motor, the prism assembly is configured so that gravity of the prism assembly is within a theoretical design range relative to torque of the rotation center, and the theoretical design range is zero or a numerical range close to zero.

In this application, by making the gravity of the prism assembly within the theoretical design range relative to the torque of the rotation center, a static pose difference of the prism motor may be guaranteed, risks of impact noise are reduced, and prism assembling precision is improved; and through rational configuration, a moment generated by the center of gravity of the prism assembly may be reduced to almost zero, so that a driving force required by the prism motor is effectively reduced, thus achieving reduction in power consumption.

In an example, a material density of the prism support is less than a material density of the prism. The prism assembly further includes a weight component, fixed on a side of the prism support away from the center of gravity of the prism and configured to balance at least partial torque generated by the gravity of the prism. In a specific example, the prism support may be made of plastic, and the prism may be made of glass. The purpose that the gravity of the prism assembly is smaller relative to torque of a rotation center line can be realized by additionally adding the weight component on the current prism support, so that improvement costs are lower.

In an example, the center of gravity of the prism assembly coincides with the rotation center. In this example, the moment generated by the center of gravity of the prism assembly is zero, so that a driving force required by the prism motor is reduced to a great extent, and power consumption is low.

According to the invention, the prism assembly further includes a magnet assembly fixed on the prism support and configured to be mated with a driving coil of the prism motor to drive the prism assembly to rotate around the rotation center; and the weight component is the magnet assembly. The magnet assembly generating the driving force serves as the weight component, so that driving requirements can be met, and the driving force of the prism motor is reduced without adding redundant components. The prism motor is compact in volume and low in power consumption.

According to the invention, the magnet assembly includes a first magnet and a second magnet, a volume of the first magnet is greater than a volume of the second magnet, and the first magnet is located on a side of the second magnet away from a light-emitting surface of the prism. In this way, the volume of the first magnet increases toward the side away from the prism, and accordingly, a center-of-gravity position of the entire prism assembly approaches the rotation center, so that flexible adjustment is achieved, and a better effect is realized.

In an example, the first magnet and the second magnet are cuboids with a thickness, the sizes of adjacent sides of the first magnet and the second magnet are the same, and the size of the other side of the first magnet is greater than the size of the other side of the second magnet. In this example, the prism and the two magnets are simple in structure, and are easy to machine and mount.

In an example, there are two magnet assemblies, respectively located on a first side surface and a second side surface of the prism support that are perpendicular to each other, the prism is a triple prism, the second side surface is perpendicular to a light inlet main axis of the prism, and the first side surface is parallel to an end surface of the prism. The two magnet assemblies are respectively defined as a first magnet assembly and a second magnet assembly; the base is provided with a first driving coil and a second driving coil; the first driving coil is mated with the first magnet assembly to generate a driving force that drives the prism assembly to rotate around the light inlet main axis; and the second driving coil is mated with the second magnet assembly to generate a driving force that drives the prism assembly to rotate around a second axis perpendicular to a plane that is determined by the light inlet main axis and a light-emitting main axis.

According to an aspect, this application further provides an electronic device, including the prism motor described in any one of the above.

The prism motor and the electronic device of this application include the prism assembly, and thus have the above technical effects of the prism assembly.

### BRIEF DESCRIPTION OF DRAWINGS

FIG. 1 is an overall schematic diagram of an imaging module according to an embodiment of this application;
FIG. 2 is a partial three-dimensional schematic diagram of a prism motor in FIG. 1;
FIG. 3 is a cross-sectional view in a direction of A-A in FIG. 2;
FIG. 4 is a schematic assembling diagram of a prism support, a first magnet assembly, and an elastic piece in FIG. 2;
FIG. 5 is a schematic assembling diagram of some components in FIG. 2;
FIG. 6 is a schematic diagram of another view of the structure shown in FIG. 5;
FIG. 7 is a schematic assembling diagram of components other than a second magnet assembly in FIG. 6; and
FIG. 8 is an exploded view of a main structure in FIG. 1.

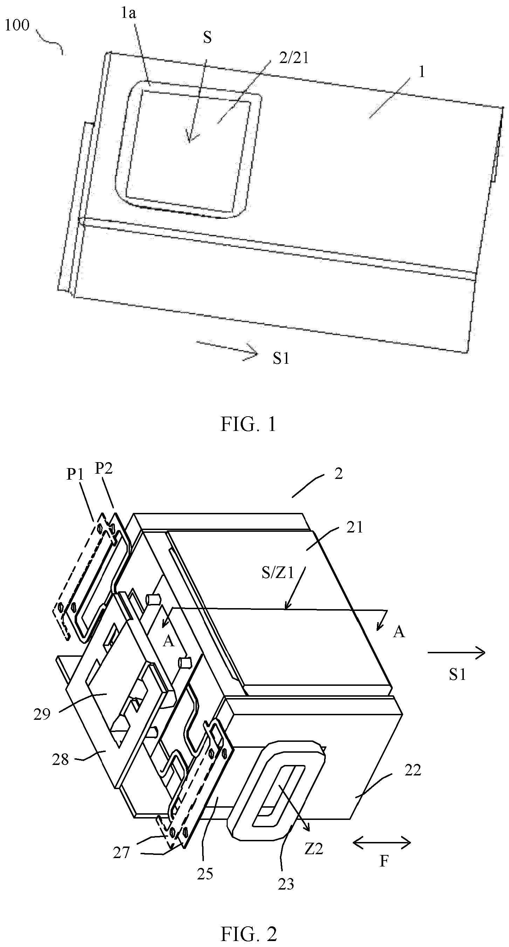

A corresponding relationship among drawing signs in FIG. 1 to FIG. 8 and component names is shown as follows.
100 Imaging module; 1 Housing; 1a Light-transmitting hole; 3 Lens assembly; 4 Lens motor carrier;
2 Prism motor; 20 Base; 21 Prism; 211 Light inlet surface; 212 Light-emitting surface; 213 Reflected light surface; 22 Prism support; 220 Main body; 221 Side wall; 222 Inclined wall; 223 Protruding portion; 224 First groove; 225 Second groove; 226 Cavity; 22a First side surface; 22b Second side surface; 23 First driving coil; 24 Second driving coil; 25 First magnet assembly; 251 First magnet; 252 Second magnet; 26 Second magnet assembly; 27 Elastic piece; 28 Fixing frame; 29 Support body; 291 Extension portion; 30 PCB board; 2-1 Sphere portion; and 2-2 Lining plate.

### DETAILED DESCRIPTION

In view of technical problems of easy occurrence of jitters, abnormal sounds, and prism assembly errors in a current prism motor during use, intensive studies are performed in this application, and the studies have found that, since a current prism and a prism support fixing the prism are made of different materials, the material of the prism is denser in density, and the prism support is lighter in density, so that the weight of the prism is often greater than the weight of the prism support where the prism is located, causing the overall center of gravity of rotation to tilt to a side of the prism after the prism and the prism support are assembled, then a rotation center is located on the prism support side, the center of gravity does not coincide with the rotation center, and the gravity induces a rotation moment to cause the prism motor to tilt without being energized, easily leading to jitters, abnormal sounds, and prism assembly errors. Meanwhile, the moment of the center of gravity generates a reacting force on a driving force, so that power consumption of the prism motor is increased.

Based on the above findings, this application provides a technical solution, which can eliminate or reduce the probability of the occurrence of the above technical problems.

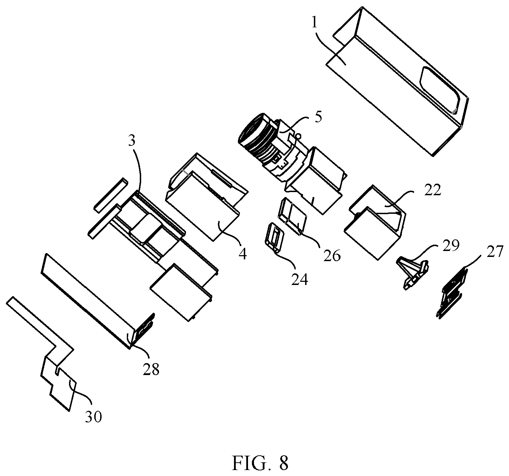

Refer to FIG. 1 and FIG. 8. FIG. 1 is an overall schematic diagram of an imaging module according to an embodiment of this application. FIG. 8 is an exploded view of a main structure in FIG. 1.

An embodiment of this application provides an electronic device. The electronic device includes an imaging module 100. The imaging module 100 includes a prism motor 2, a lens assembly 3, and a lens motor carrier 4. The lens assembly 3 (covered by a housing 1) is not shown in FIG. 1. The lens assembly 3 is located in a right-side position of the prism motor 2 in FIG. 1. The prism motor 2 and the lens assembly 3 may be assembled inside the housing 1, and the housing 1 mainly plays a role in protecting components located inside the housing. The housing 1 is provided with a light-transmitting hole 1a, and external light first enters the prism motor 2 and then enters the lens assembly 3 after being refracted by the prism motor 2. A main light path direction S entering the prism motor 2 and an emergent light path direction S1 after refraction of the prism motor 2 are provided in FIG. 1, and the light enters the lens assembly in the emergent light path direction S1. For the electronic device, S is usually a thickness direction of the electronic device, and S1 is usually a length direction of the electronic device.

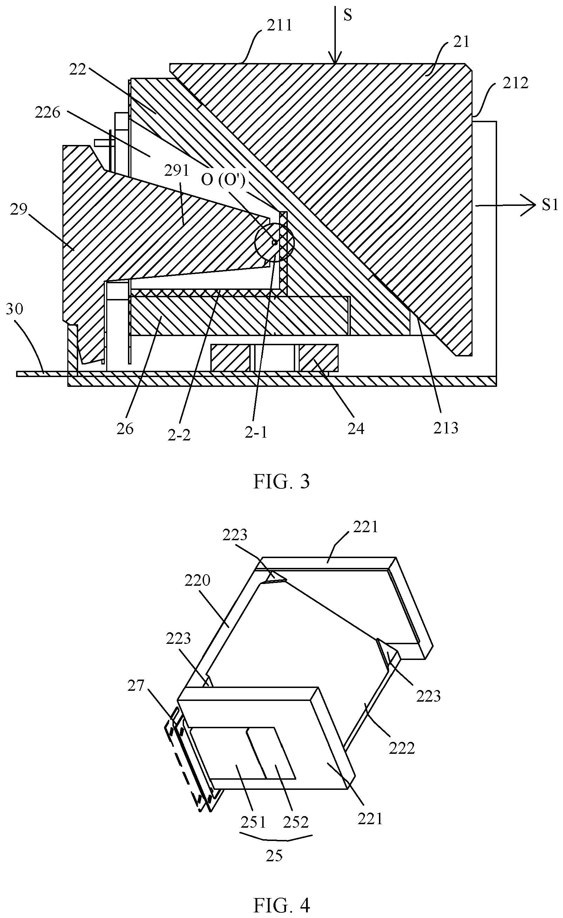

Refer to FIG. 2 to FIG. 4. FIG. 2 is a partial three-dimensional schematic diagram of a prism motor in FIG. 1. FIG. 3 is a cross-sectional view in a direction of A-A in FIG. 2. FIG. 4 is a schematic assembling diagram of a prism support, a first magnet assembly, and an elastic piece in FIG. 2.

The prism motor 2 further includes a base 20, a first driving coil, a prism 21, and a prism support 22. Refer to FIG. 3. The prism 21 may be a triple prism. The triple prism is a prism with a cross section being a right-angled triangle. A circumferential surface of the prism includes three surfaces successively connected end to end, which are a light inlet surface 211, a light-emitting surface 212, and a reflected light surface 213. The light inlet surface 211 and the light-emitting surface 212 are usually vertical, and the reflected light surface 213 is an inclined surface connected between the light inlet surface 212 and the light-emitting surface 212. Only the light inlet surface 211 is shown in FIG. 2, and other light surfaces may be understood in combination with FIG. 3. The fact that three-dimensional structures of other light surfaces are not shown does not prevent a person skilled in the art from understanding the technical solutions herein. The external light enters the prism 21 via the light inlet surface, and is emitted from the prism 21 by the light-emitting surface after being reflected by the reflected light surface. The reflected light surface is usually mounted opposite to an inclined wall 222 of the prism support. The prism 21 is not limited to the triple prism described here, and may certainly be other forms of prisms, and a main function of the prism is to change a light propagation path to meet requirements for a mounting position of the lens assembly 5. Herein, the technical solutions and technical effects are continuously introduced by using the prism 21 being the triple prism as an example.

Refer to FIG. 4. In a specific example, the prism support 22 includes a main body 220. The main body 220 has two side walls 221. There is an inclined wall 222 between the two side walls 221. A mounting space for mounting the prism 21 is enclosed by the inclined wall 222 and the two side walls 221. For the triple prism, the mounting space is an angular structure matching the triple prism. The reflected light surface of the prism 21 is opposite to the inclined wall 222. From FIG. 3 to FIG. 6, it can be seen that most of the structure of the prism 21 may be located in the mounting space that is used for mounting the prism 21 and that is enclosed by the inclined wall 222 and the two side walls 221, and not the entire prism 21 is completely located inside the mounting space, so that the position of the prism 21 is conveniently adjusted. Definitely, it is not excluded that the entire prism 21 is completely located inside the mounting space, and the position of the prism 21 is conveniently adjusted by reserving enough space between the prism 21 and the prism support 22, so as to achieve an anti-jitter function of the imaging module.

The prism 21 is fixed on the prism support 22 to form a prism assembly. The prism 21 may be fixed with the prism support 22 through dispensing. For example, the two side walls 221 of the prism support 22 are fixed with corresponding side walls of the prism 21 through dispensing. Definitely, fixation between the prism 21 and the prism support 22 is not limited to the description herein, but may be in other ways.

The prism assembly is rotatably supported on the base 20, and generally, the prism support 22 is rotatably supported on the base 20. That is, the prism support 22 has a rotation center O rotating relative to the base 20 of the prism motor 2.

The prism assembly in this application is configured so that the gravity of the prism assembly is within a theoretical design range relative to the torque of the rotation center O, and the theoretical design range is zero or a numerical range close to zero.

In this application, by making the gravity of the prism assembly within the theoretical design range relative to the torque of the rotation center O, a static pose difference of the prism motor may be guaranteed, risks of resonance and wobbly impact noise are reduced, and prism assembling precision is improved. Through rational configuration, a moment generated by the center of gravity of the prism assembly is, according to the invention, reduced to almost zero or zero, so that a driving force required by the prism motor is effectively reduced, thus achieving reduction in power consumption.

In this application, the prism 21 is made of glass, and the prism support 22 is made of plastic. Definitely, materials of the prism 21 and the prism support 22 are not limited to the description herein. Generally, a material density of the prism support 22 is less than a material density of the prism 21, so that the center of gravity of the entire assembly formed by assembling the prism 21 and the prism support 22 is biased to the side of the prism 21, and not located in the center of the assembly. While the rotation center O is generally located in the central position of the prism assembly, to make the center of gravity of the prism assembly as close to the rotation center as possible, the prism assembly of this application is further disposed as follows.

In an example, the prism assembly further includes a weight component, fixed on a side of the prism support 22 away from the center of gravity of the prism 21. In this embodiment, the distance between a center of gravity O' of the prism assembly formed by the prism 21, the prism support 22, and the weight component and the rotation center O is small or the center of gravity O' coincides with the rotation center O, so that the gravity of the prism assembly formed by the prism, the prism support, and the weight component is smaller relative to the torque of the rotation center.

In this way, the gravity of the prism assembly can be smaller relative to the torque of the rotation center by additionally adding the weight component on the current prism support 22, so that improvement costs are low.

Definitely, an ideal state is that the center of gravity O' of the prism assembly coincides with the rotation center O, so that the prism assembly in a static state generates almost no torque to the rotation center O.

The shape and material of the weight component may be rationally selected according to specific products, and even if structural parameters of the weight component are not disclosed herein, this does not create any obstacle for those skilled in the art to understand and implement the above technical solutions herein. When an anti-jitter function operation is performed on the imaging module, the power that the prism assembly rotates relative to the rotation center O may be derived from the magnet assembly and the driving coil. One of the magnet assembly and the driving coil is mounted on the prism assembly, and the other one is mounted on the base. In other words, the magnet assembly may be mounted to the prism support 22 of the prism assembly, and may also be mounted on the base 20. Accordingly, the driving coil mated with the magnet assembly may be mounted on the base 20, and may also be mounted on the prism support 22. Herein, the technical solutions and technical effects are continuously introduced by using an example in which the magnet assembly is fixed on the prism support 22 of the prism assembly.

In an embodiment, the prism assembly further includes the magnet assembly fixed on the prism support 22 and configured to be mated with the driving coil of the prism motor to drive the prism assembly to rotate around the rotation center O. When the driving coil is energized, a driving force is generated between the driving coil and the magnet assembly, and under the action of the driving force, the prism assembly may rotate relative to the rotation center. The direction of the driving force may be changed by changing a direction of a current introduced into the driving coil. The driving coil generally includes a first end and a second end that are electrically connected with an external current. If a current introduced from the first end is defined as a forward current, and a current introduced from the second end is a reverse current, when the forward current is introduced into the driving coil, a first driving force making the prism assembly rotate clockwise is generated by the driving coil and the magnet assembly, and when the reverse current is introduced into the driving coil, a second driving force making the prism assembly rotate anticlockwise is generated by the driving coil and the magnet assembly. The direction of the first driving force is opposite to the direction of the second driving force, and the magnitudes of the first driving force and the second driving force may be controlled by the magnitude of the introduced current.

In this embodiment, the weight component is the magnet assembly.

There may be more than one group of the driving coils and the magnet assemblies, and an assembly formed by the driving coil and the magnet assembly is defined as a driving coil assembly herein. According to different mounting positions, the driving coil assembly may include a first driving coil assembly and a second driving coil assembly. The first driving coil assembly is configured to drive the prism assembly to rotate around a first axis Z1, and the second driving coil assembly is configured to drive the prism assembly to rotate around a second axis. The first driving coil assembly is located on a first side surface 22a of the prism assembly, and the second driving coil assembly is located on a second side surface 22b of the prism assembly. The first axis is not parallel to the second axis.

The prism assembly in this application can rotate around the first axis Z1 and the second axis Z2 under the driving of the first driving coil assembly and the second driving coil assembly, respectively, and the first driving coil assembly and the second driving coil assembly only occupy two side surface spaces of the prism assembly, so that a design space of a motor is saved, the size of the motor is reduced, and the cost and process difficulty of the motor are reduced.

Refer to FIG. 3. In this application, the first axis Z1 is parallel to the light inlet main axis S of the prism assembly, that is, the prism assembly can rotate around a direction parallel to the light inlet main axis S. In the ideal state, the first axis Z1 coincides with the light inlet main axis S. Considering privacy such as assembling errors, the first axis Z1 may not coincide with the light inlet main axis S, and under the driving of the first driving coil assembly, the prism assembly can rotate a predetermined angle around the first axis Z1.

In this application, the second axis Z2 is perpendicular to a plane determined by the light inlet main axis S and the light-emitting main axis S1 of the prism assembly, that is, the prism assembly may rotate around a point O in a cross section shown in FIG. 3. In other words, under the driving of the second driving coil assembly, the prism assembly may clockwise or anticlockwise rotate, in a pitching manner, the predetermined angle around the point O in the cross section (a vertical plane) shown in FIG. 3.

In an example, the first driving coil assembly includes a first driving coil 23 and a first magnet assembly 25. One of the first driving coil and the first magnet assembly is fixed on the base 20, and the other one is fixed on the prism assembly. In the drawings, specific implementations that the first driving coil 23 is fixed on the base 20 (the base is not shown, but those skilled in the art are not prevented from understanding the technical solutions herein), and the first magnet assembly 25 is fixed on the prism support 22 are shown. Definitely, the first driving coil 23 is also fixed on the prism support 22, and the first magnet assembly 25 is fixed on the base 20. FIG. 2 shows a rough direction of a driving force F generated by a current introduced by the first driving coil 23. The first magnet assembly 25 may include a magnet, and may certainly have two or more magnets, and a specific example of including two magnets is provided below.

In an example, the first magnet assembly 25 includes a first magnet 251 and a second magnet 252, and the volume of the first magnet 251 is greater than the volume of the second magnet 252, so that the weight of the first magnet 251 is greater than the weight of the second magnet 252. Because the first magnet 251 is located on a side of the second magnet 252 away from the light-emitting surface 22 of the prism 21, in combination with FIG. 3 for understanding, for the triple prism, the light inlet surface 211 is perpendicular to the light-emitting surface 212, the refracting surface 213 is an inclined surface, and the refracting surface 213 is mounted and positioned opposite to a protruding portion 223 of the prism support 22. From FIG. 4, it can be seen that a protruding portion 223 (the protruding portion at a left lower corner is not shown) is disposed on each of four corners of the inclined wall 222 of the prism support 22, the refracting surface 213 of the prism 21 is partially attached to and fixed with the protruding portion 223, and there are gaps between other positions of the refracting surface 213 of the prism 21 and the inclined wall, as shown in FIG. 3. Torque generated by the first magnet 251 and the second magnet 252 relative to the rotation center O and the torque of the gravity of the prism support 22 and the prism 21 relative to the rotation center O are same in magnitude, and different in direction.

The first magnet 251 and the second magnet 252 are generally cuboids; the first magnet 251 and the second magnet 252 are the cuboids with a thickness; and the sizes of adj acent sides of the first magnet 251 and the second magnet 252 are the same, and the size of the other side of the first magnet 251 is greater than the size of the other side of the second magnet 252. That is to say, when the thicknesses of the first magnet 251 and the second magnet 252 are the same, the sizes of the sides are the same, and different sizes may be realized by configuring the sizes of the other sides.

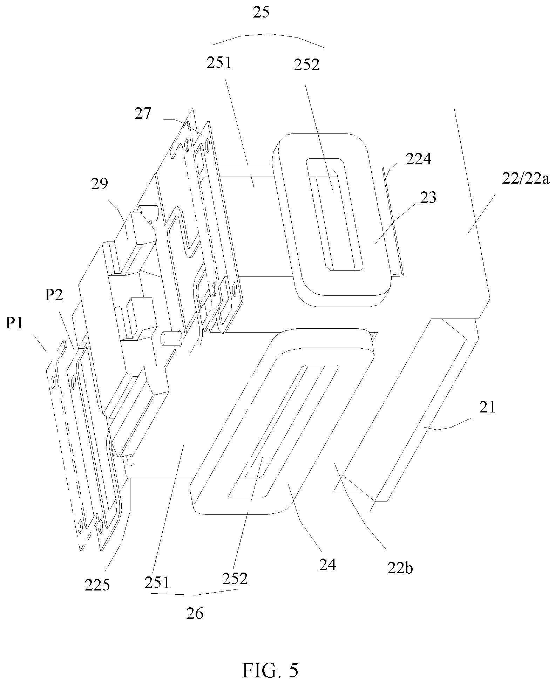

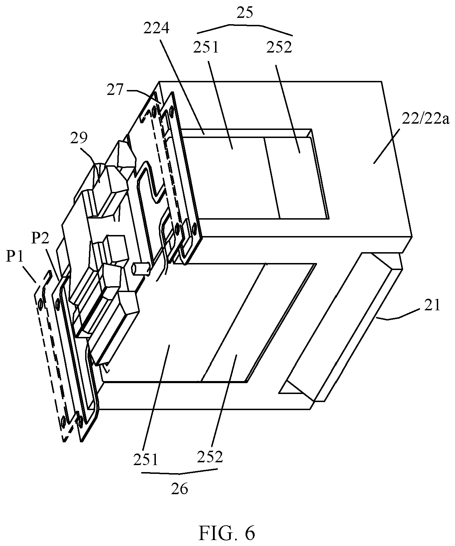

Understanding in combination with FIG. 5 and FIG. 6, FIG. 5 is a schematic assembling diagram of some components in FIG. 2; and FIG. 6 is a schematic diagram in which the driving coil in FIG. 5 is deleted. For the first magnet assembly 25 mounted on the first side surface 22a, first sides of the first magnet 251 and the second magnet 252 in an S direction and thicknesses and sizes along S2 are the same, and the difference only lies in that the sizes of second sides in an S1 direction are different. Likewise, the sizes of the first sides of the first magnet 251 and the second magnet 252 in the second magnet assembly 26 in an S2 direction are the same, thicknesses in the S direction are the same, and the difference lies in that the sizes of the second sides of the first magnet and the second magnet in the S1 direction are different.

Definitely, the first magnet 251 and the second magnet 252 may also be in other shapes, as long as the above technical effects can be realized.

In this embodiment, the magnet assembly serves as the weight component, so that the above technical problems in the prior art may be solved without adding redundant components.

The prism is the triple prism; there are two magnet assemblies, which are respectively located on a first side surface and a second side surface of the prism support that are perpendicular to each other. The first driving coil is mated with the first magnet assembly to generate a driving force making the prism assembly rotate around the light inlet main axis; the second driving coil is mated with the second magnet assembly to generate a driving force making the prism assembly rotate around the second axis perpendicular to the plane that is determined by the light inlet main axis and the light-emitting main axis; the second side surface is perpendicular to the light inlet main axis of the prism; and the first side surface is parallel to an end surface of the prism.

The first driving coil 23 may generate an acting force with the first magnet assembly 25 after being energized, so as to make the prism support 22 rotate around the first axis Z1.

Definitely, what is mated with the first driving coil 23 to generate the acting force is not limited to magnets, and may also be other magnetic field components that can generate a magnetic field.

In this application, the second driving coil assembly includes a second driving coil 24 and a second magnet assembly 26; and one of the second driving coil and the second magnet assembly is fixed on the base, and the other one is fixed on the prism assembly. Specific implementations that the second driving coil is fixed on the base and the second magnet assembly is fixed on the prism support are shown in FIG. 3, and definitely, the second driving coil is also fixed on the prism support, and the second magnet assembly is fixed on the base. In an example, the second magnet assembly includes a first magnet and a second magnet, and the two magnets may be same in size, and may also be different in size, definitely.

The second driving coil 24 may generate an acting force with the second magnet assembly 26 after being energized, so as to make the prism support 22 rotate around the second axis Z2.

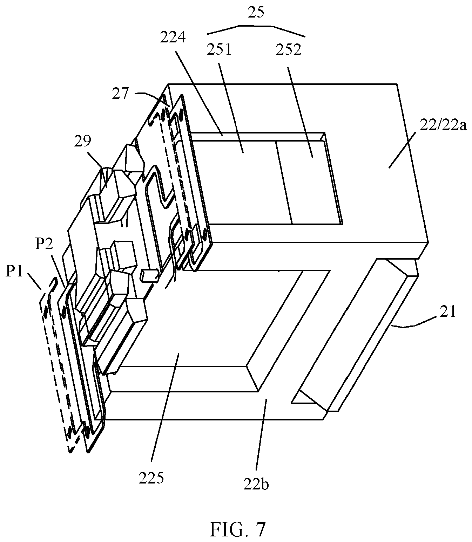

Refer to FIG. 7. The first side surface 22a and the second side surface 22b of the prism support may be two surfaces perpendicular to each other; and the first side surface 22a and the second side surface 22b may be respectively provided with a first groove 224 and a second groove, which are respectively configured to mount the first magnet assembly and the second magnet assembly.

Definitely, what is mated with the second driving coil 24 to generate the acting force is not limited to magnets, and may also be other magnetic field components that can generate a magnetic field.

In this application, the prism support 22 and the base 20 are spherically supported, and the prism support 22 rotates around a spherical support position.

Further refer to FIG. 3. In an example, the prism assembly further includes a support body 29 fixedly connected to the base 20; the support body 29 is provided with an extension portion 291 parallel to the light-emitting main axis S1 of the prism; and the extension portion 291 at least partially extends into the prism support 22 and is spherically supported with the prism support 22. It is to be noted that, the extending of the above extension portion 291 parallel to the light-emitting main axis S1 only indicates a rough direction of the length of the extension portion S1, and is not absolutely parallel to the light-emitting main axis S1. Specifically, the prism support 22 may be provided with a cavity 226 with an opening towards the extension portion; and the extension portion 291 is inserted into the cavity 226 from the opening and is in spherical contact with an inner wall of the cavity 226. Specifically, a right end portion of the extension portion 291 spherically bears against the corresponding inner wall of the cavity 226, so that the support body 29 may relatively rotate around a spherical contact position of the prism support 22.

Specifically, one of the end portion of the extension portion 291 and the inner wall of the cavity 226 may be provided with a sphere portion 2-1, and the other one is provided with a concave portion mated with the sphere portion 2-1. FIG. 3 shows a specific implementation of the extension portion 291 provided with the sphere portion 2-1. The fixation mode is relatively simple in structure, and is easy to implement. Definitely, the sphere 2-1 may also be fixed on the inner wall of the cavity 226.

In order to improve the stability of the positioning of the prism assembly, the prism assembly further includes an elastic tensioning member; and the elastic tensioning member is tensioned between the base 20 and the prism support 22, so as to make the prism support 22 bear against the support body 29. Specifically, the elastic tensioning member includes an elastic piece. Two ends of the elastic piece are fixedly connected with two side walls of the prism support, and a middle region is fixedly connected with the prism support. FIG. 6 shows the position of the elastic piece when being at a P1 position and a P2 position; and only partial structure, which is connected with the base, of the elastic piece at the P1 position is shown. The partial structure of the elastic piece 27 at the P1 position in FIG. 4 to FIG. 7 is shown with dashed lines; and showing the partial structure of the elastic piece 27 at the P1 position is mainly based on clear identifiers of the entire view, and the showing of two positions of the elastic piece does not affect the marking of the entire structure of the view, facilitating the understanding of the technical solutions by those skilled in the art.

The elastic piece 27 may be made of a material having an elastic deformation capacity, such as a leaf spring, as long as an elastic force meeting use requirements can be provided.

In addition, the prism motor further includes a PCB 30 electrically connected with the first driving coil 23 and the second driving coil 24.

In addition, an abrasion-resistant lining plate 2-2 may also be added between the support body 29 and the prism support 22. The lining plate 2-2 is fixed in the cavity 226, and the extension portion 291 is in spherical contact with the lining plate 2-2. In this way, abrasions of the extension portion to the prism support 22 may be reduced as much as possible. The lining plate 2-2 may be fixed in the cavity 226 through bonding. Positions that the support body 29 may be in contact with the prism support 22 during rotation may all be provided with the lining plates 2-2, so as to reduce the abrasions to the prism support 22 as much as possible; a specific structure of the lining plate 2-2 may be specifically determined according to products; and the understanding and implementation of the technical solutions by those skilled in the art are not affected without disclosing the shape of the lining plate 2-2 herein.

FIG. 3 shows that the lining plate 2-2 is roughly of an L-shaped structure, and the sphere 2-1 mounted on a right end of the extension portion 291 is spherically mated with a vertical wall of the lining plate 2-2.

The electronic device of the embodiments may include, but is not limited to, a mobile phone, and may also be other electronic devices, as long as the electronic device has a need for photographic functions, which may all use the solution. For example, the electronic device may include a notebook computer, and may also include mobile terminals such as a wearable device, a vehicle device, an augmented reality (augmented reality, AR)/virtual reality (virtual reality, VR) device, an ultra-mobile personal computer (ultra-mobile personal computer, UMPC), a Netbook, a personal digital assistant (personal digital assistant, PDA), or may also include professional photographing devices such as a digital camera, a single lens reflective camera/mirrorless camera, a motion camera, a gimbal camera, an unmanned aerial vehicle, etc.

The principle and implementations of this application are described herein through specific examples. The descriptions of the foregoing embodiments are merely used for helping understand the method and core ideas of this application.

## Claims

1. A prism motor (2), comprising at least a prism assembly and a base, the prism assembly comprising at least a prism (21) and a prism support (22), wherein the prism assembly has a rotation center (O) rotating relative to the base;
the prism assembly further comprises a weight component fixed on a side of the prism support (22) away from a center of gravity of the prism (21);
the weight component comprises a magnet assembly (25, 26), wherein the magnet assembly (25, 26) is fixed on the prism support (22) and configured to be mated with a driving coil (23, 24) of the prism motor (2) to drive the prism assembly to rotate around the rotation center (O);
wherein the magnet assembly (25, 26) comprises a first magnet (251) and a second magnet (252), the volume of the first magnet (251) is greater than the volume of the second magnet (252), and the first magnet (251) is located on a side of the second magnet (252) away from a light-emitting surface of the prism (21);
and the prism assembly is configured such that a moment generated by a center of gravity (O') of the prism assembly based on the first magnet (251) and the second magnet (252) is almost zero or zero.

2. The prism motor (2) according to claim 1, wherein the magnet assembly (25, 26) comprises a second magnet assembly (26), wherein the driving coil of the prism motor (2) includes a second driving coil (24), and the second magnet assembly (26) is configured to generate a first driving force under the drive of the second driving coil (24), and the first driving force is used to drive the prism assembly to rotate around the second axis (Z2), and the second axis (Z2) is perpendicular to a plane determined by a light inlet main axis (S) and a light-emitting main axis (S1) of the prism assembly.

3. The prism motor (2) according to any of claims 1 to 2, wherein the magnet assembly (25,26) comprises a first magnet assembly (25), the driving coil of the prism motor (2) further comprises a first driving coil (23), the first driving coil (23) is fixed to the base (20), and the first magnet assembly (25) is configured to generate a second driving force under the drive of the first driving coil (23), the second driving force is used to drive the prism assembly to rotate around a first axis (Z1), the first axis (Z1) is parallel to a light inlet main axis (S) of the prism assembly.

4. The prism motor (2) according to any of claims 1 to 3, wherein the center of gravity (O') of the prism assembly coincides with the rotation center (O).

5. The prism motor (2) according to any of claims 1 to 4, wherein a material density of the prism support (22) is less than a material density of the prism (21).

6. The prism motor (2) according to any of claims 1 to 5, wherein the first magnet (251) and the second magnet (252) are cuboids with a thickness, the sizes of adjacent sides of the first magnet (251) and the second magnet (252) are the same, and the size of the other side of the first magnet (251) is greater than the size of the other side of the second magnet (252).

7. The prism motor (2) according to claims 2 and 3, wherein the first magnet assembly (25) and the second magnet assembly (26) are respectively located on a first side surface (22a) and a second side surface (22b) of the prism support (22) that are perpendicular to each other, the prism (21) is a triple prism, the second side surface (22b) is perpendicular to a light inlet main axis (S) of the prism (21), and the first side surface (22a) is parallel to an end surface of the prism (21).

8. The prism motor (2) according to any of claims 1 to 7, wherein the prism (21) is made of glass, and the prism support (22) is made of plastic.

9. The prism motor (2) according to claim 7, wherein the first side surface (22a) and the second side surface (22b) are respectively provided with a first groove (224) and a second groove (225), which are respectively configured to mount the first magnet assembly (25) and the second magnet assembly (26).

10. The prism motor (2) according to claims 2 and 3, or according to claim 7, wherein the prism motor (2) further comprises a PCB (30) electrically connected with the first driving coil (23) and the second driving coil (24).

11. The prism motor (2) according to any of claims 1 to 10, wherein the prism motor (2) further comprises a support body (29), the support body (29) fixedly connected to the base (20), the support body (29) is provided with an extension portion (291); the prism support (22) has a cavity (226) facing the extension portion (291), and the extension portion (291) is at least partially inserted into the cavity (226) and is in spherical contact with an inner wall of the cavity (226).

12. The prism motor (2) according to claim 11, wherein the extension portion (291) has a sphere portion (2-1) at the end, and the sphere portion (2-1) contacts the inner wall of the cavity (226).

13. The prism motor (2) according to claim 12, wherein the prism module further includes a lining plate (2-2), the lining plate (2-2) is fixed in the cavity (226), and the extension portion (291) is in spherical contact with the lining plate (2-2).

14. An electronic device, comprising the prism motor (2) according to any of claims 1 to 13.

## Patentansprüche

1. Prismenmotor (2), umfassend zumindest eine Prismenbaugruppe und eine Basis, wobei die Prismenbaugruppe zumindest ein Prisma (21) und einen Prismenhalter (22) umfasst, wobei die Prismenbaugruppe ein Rotationszentrum (O) aufweist, das relativ zur Basis rotiert;
wobei die Prismenbaugruppe ferner eine Gewichtskomponente umfasst, die an einer Seite des Prismenhalters (22) befestigt ist, welche von einem Schwerpunkt des Prismas (21) abgewandt ist;
wobei die Gewichtskomponente eine Magnetbaugruppe (25, 26) umfasst, wobei die Magnetbaugruppe (25, 26) am Prismenhalter (22) befestigt und dazu ausgebildet ist, mit einer Antriebsspule (23, 24) des Prismenmotors (2) zusammenzuwirken, um die Prismenbaugruppe zur Rotation um das Rotationszentrum (O) anzutreiben;
wobei die Magnetbaugruppe (25, 26) einen ersten Magneten (251) und einen zweiten Magneten (252) umfasst, wobei das Volumen des ersten Magneten (251) größer als das Volumen des zweiten Magneten (252) ist und der erste Magnet (251) an einer Seite des zweiten Magneten (252) angeordnet ist, die von einer lichtemittierenden Fläche des Prismas (21) abgewandt ist;
und wobei die Prismenbaugruppe so ausgebildet ist, dass ein durch einen Schwerpunkt (O') der Prismenbaugruppe basierend auf dem ersten Magneten (251) und dem zweiten Magneten (252) erzeugtes Moment nahezu null oder null ist.

2. Prismenmotor (2) nach Anspruch 1, wobei die Magnetbaugruppe (25, 26) eine zweite Magnetbaugruppe (26) umfasst, wobei die Antriebsspule des Prismenmotors (2) eine zweite Antriebsspule (24) enthält und die zweite Magnetbaugruppe (26) dazu ausgebildet ist, unter dem Antrieb der zweiten Antriebsspule (24) eine erste Antriebskraft zu erzeugen, und wobei die erste Antriebskraft dazu dient, die Prismenbaugruppe zur Rotation um die zweite Achse (Z2) anzutreiben, und wobei die zweite Achse (Z2) senkrecht zu einer Ebene steht, die durch eine Lichteintrittshauptachse (S) und eine Lichtaustrittshauptachse (S1) der Prismenbaugruppe bestimmt ist.

3. Prismenmotor (2) nach einem der Ansprüche 1 bis 2, wobei die Magnetbaugruppe (25, 26) eine erste Magnetbaugruppe (25) umfasst, wobei die Antriebsspule des Prismenmotors (2) ferner eine erste Antriebsspule (23) umfasst, wobei die erste Antriebsspule (23) an der Basis (20) befestigt ist und die erste Magnetbaugruppe (25) dazu ausgebildet ist, unter dem Antrieb der ersten Antriebsspule (23) eine zweite Antriebskraft zu erzeugen, wobei die zweite Antriebskraft dazu dient, die Prismenbaugruppe zur Rotation um eine erste Achse (Z1) anzutreiben, wobei die erste Achse (Z1) parallel zu einer Lichteintrittshauptachse (S) der Prismenbaugruppe verläuft.

4. Prismenmotor (2) nach einem der Ansprüche 1 bis 3, wobei der Schwerpunkt (O') der Prismenbaugruppe mit dem Rotationszentrum (O) zusammenfällt.

5. Prismenmotor (2) nach einem der Ansprüche 1 bis 4, wobei eine Materialdichte des Prismenhalters (22) geringer ist als eine Materialdichte des Prismas (21).

6. Prismenmotor (2) nach einem der Ansprüche 1 bis 5, wobei der erste Magnet (251) und der zweite Magnet (252) quaderförmig mit einer Dicke sind, die Größen der benachbarten Seiten des ersten Magnets (251) und des zweiten Magnets (252) gleich sind und die Größe der anderen Seite des ersten Magnets (251) größer als die Größe der anderen Seite des zweiten Magnets (252) ist.

7. Prismenmotor (2) nach den Ansprüchen 2 und 3, wobei die erste Magnetanordnung (25) und die zweite Magnetanordnung (26) jeweils auf einer ersten Seitenfläche (22a) und einer zweiten Seitenfläche (22b) des Prismenhalters (22) angeordnet sind, die senkrecht zueinander stehen, wobei das Prisma (21) ein Dreifachprisma ist, die zweite Seitenfläche (22b) senkrecht zu einer Lichteintrittshauptachse (S) des Prismas (21) steht und die erste Seitenfläche (22a) parallel zu einer Endfläche des Prismas (21) verläuft.

8. Prismenmotor (2) nach einem der Ansprüche 1 bis 7, wobei das Prisma (21) aus Glas und der Prismenhalter (22) aus Kunststoff gefertigt ist.

9. Prismenmotor (2) nach Anspruch 7, wobei die erste Seitenfläche (22a) und die zweite Seitenfläche (22b) jeweils mit einer ersten Nut (224) und einer zweiten Nut (225) versehen sind, die jeweils zur Aufnahme der ersten Magnetanordnung (25) und der zweiten Magnetanordnung (26) konfiguriert sind.

10. Prismenmotor (2) nach den Ansprüchen 2 und 3 oder nach Anspruch 7, wobei der Prismenmotor (2) ferner eine Leiterplatte (PCB) (30) umfasst, die elektrisch mit der ersten Antriebsspule (23) und der zweiten Antriebsspule (24) verbunden ist.

11. Prismenmotor (2) nach einem der Ansprüche 1 bis 10, wobei der Prismenmotor (2) ferner einen Stützkörper (29) umfasst, wobei der Stützkörper (29) fest mit der Basis (20) verbunden ist, wobei der Stützkörper (29) mit einem Verlängerungsabschnitt (291) versehen ist; wobei der Prismenhalter (22) einen dem Verlängerungsabschnitt (291) zugewandten Hohlraum (226) aufweist und der Verlängerungsabschnitt (291) zumindest teilweise in den Hohlraum (226) eingesetzt ist und in sphärischem Kontakt mit einer Innenwand des Hohlraums (226) steht.

12. Prismenmotor (2) nach Anspruch 11, wobei der Verlängerungsabschnitt (291) am Ende einen Kugelabschnitt (2-1) aufweist und der Kugelabschnitt (2-1) die Innenwand des Hohlraums (226) berührt.

13. Prismenmotor (2) nach Anspruch 12, wobei das Prismenmodul ferner eine Auskleidungsplatte (2-2) umfasst, wobei die Auskleidungsplatte (2-2) im Hohlraum (226) fixiert ist und der Verlängerungsabschnitt (291) in sphärischem Kontakt mit der Auskleidungsplatte (2-2) steht.

14. Elektronisches Gerät, umfassend den Prismenmotor (2) nach einem der Ansprüche 1 bis 13.

## Revendications

1. Moteur à prisme (2), comprenant au moins un ensemble prisme et une base, l'ensemble prisme comprenant au moins un prisme (21) et un support de prisme (22), dans lequel l'ensemble prisme présente un centre de rotation (O) tournant par rapport à la base ;
l'ensemble prisme comprend en outre un composant de poids fixé sur un côté du support de prisme (22) éloigné d'un centre de gravité du prisme (21) ;
le composant de poids comprend un ensemble aimant (25, 26), dans lequel l'ensemble aimant (25, 26) est fixé sur le support de prisme (22) et configuré pour être couplé avec une bobine d'entraînement (23, 24) du moteur à prisme (2) pour entraîner l'ensemble prisme en rotation autour du centre de rotation (O) ;
dans lequel l'ensemble aimant (25, 26) comprend un premier aimant (251) et un second aimant (252), le volume du premier aimant (251) est supérieur au volume du second aimant (252), et le premier aimant (251) est situé sur un côté du second aimant (252) éloigné d'une surface d'émission de lumière du prisme (21) ;
et l'ensemble prisme est configuré de telle sorte qu'un moment généré par un centre de gravité (O') de l'ensemble prisme basé sur le premier aimant (251) et le second aimant (252) est presque nul ou nul.

2. Moteur à prisme (2) selon la revendication 1, dans lequel l'ensemble aimant (25, 26) comprend un second ensemble aimant (26), dans lequel la bobine d'entraînement du moteur à prisme (2) inclut une seconde bobine d'entraînement (24), et le second ensemble aimant (26) est configuré pour générer une première force d'entraînement sous l'entraînement de la seconde bobine d'entraînement (24), et la première force d'entraînement est utilisée pour entraîner l'ensemble prisme en rotation autour du second axe (Z2), et le second axe (Z2) est perpendiculaire à un plan déterminé par un axe principal d'entrée de lumière (S) et un axe principal d'émission de lumière (S1) de l'ensemble prisme.

3. Moteur à prisme (2) selon l'une quelconque des revendications 1 à 2, dans lequel l'ensemble aimant (25, 26) comprend un premier ensemble aimant (25), la bobine d'entraînement du moteur à prisme (2) comprend en outre une première bobine d'entraînement (23), la première bobine d'entraînement (23) est fixée à la base (20), et le premier ensemble aimant (25) est configuré pour générer une seconde force d'entraînement sous l'entraînement de la première bobine d'entraînement (23), la seconde force d'entraînement est utilisée pour entraîner l'ensemble prisme en rotation autour d'un premier axe (Z1), le premier axe (Z1) étant parallèle à un axe principal d'entrée de lumière (S) de l'ensemble prisme.

4. Moteur à prisme (2) selon l'une quelconque des revendications 1 à 3, dans lequel le centre de gravité (O') de l'ensemble prisme coïncide avec le centre de rotation (O).

5. Moteur à prisme (2) selon l'une quelconque des revendications 1 à 4, dans lequel une densité de matériau du support de prisme (22) est inférieure à une densité de matériau du prisme (21).

6. Moteur à prisme (2) selon l'une quelconque des revendications 1 à 5, dans lequel le premier aimant (251) et le second aimant (252) sont des cuboïdes avec une épaisseur, les tailles des côtés adjacents du premier aimant (251) et du second aimant (252) sont identiques, et la taille de l'autre côté du premier aimant (251) est supérieure à la taille de l'autre côté du second aimant (252).

7. Moteur à prisme (2) selon les revendications 2 et 3, dans lequel le premier assemblage magnétique (25) et le second assemblage magnétique (26) sont situés respectivement sur une première surface latérale (22a) et une seconde surface latérale (22b) du support de prisme (22) qui sont perpendiculaires l'une à l'autre, le prisme (21) est un prisme triple, la seconde surface latérale (22b) est perpendiculaire à un axe principal d'entrée de lumière (S) du prisme (21), et la première surface latérale (22a) est parallèle à une surface d'extrémité du prisme (21).

8. Moteur à prisme (2) selon l'une quelconque des revendications 1 à 7, dans lequel le prisme (21) est en verre et le support de prisme (22) est en plastique.

9. Moteur à prisme (2) selon la revendication 7, dans lequel la première surface latérale (22a) et la seconde surface latérale (22b) sont pourvues respectivement d'une première rainure (224) et d'une seconde rainure (225), lesquelles sont configurées respectivement pour monter le premier assemblage magnétique (25) et le second assemblage magnétique (26).

10. Moteur à prisme (2) selon les revendications 2 et 3, ou selon la revendication 7, dans lequel le moteur à prisme (2) comprend en outre un PCB (30) connecté électriquement à la première bobine d'entraînement (23) et à la seconde bobine d'entraînement (24).

11. Moteur à prisme (2) selon l'une quelconque des revendications 1 à 10, dans lequel le moteur à prisme (2) comprend en outre un corps de support (29), le corps de support (29) étant connecté de manière fixe à la base (20), le corps de support (29) est pourvu d'une portion d'extension (291) ; le support de prisme (22) a une cavité (226) faisant face à la portion d'extension (291), et la portion d'extension (291) est au moins partiellement insérée dans la cavité (226) et est en contact sphérique avec une paroi interne de la cavité (226).

12. Moteur à prisme (2) selon la revendication 11, dans lequel la portion d'extension (291) présente une portion sphérique (2-1) à l'extrémité, et la portion sphérique (2-1) est en contact avec la paroi interne de la cavité (226).

13. Moteur à prisme (2) selon la revendication 12, dans lequel le module de prisme comprend en outre une plaque de revêtement (2-2), la plaque de revêtement (2-2) est fixée dans la cavité (226), et la portion d'extension (291) est en contact sphérique avec la plaque de revêtement (2-2).

14. Dispositif électronique, comprenant le moteur à prisme (2) selon l'une quelconque des revendications 1 à 13.
